# EUROPEAN PATENT APPLICATION

(11) **EP 1 457 530 A1**
(43) Date of publication of application: **15.09.2004**
(21) Application number: 04290419.3
(22) Date of filing: 17.02.2004
(51) Int. Cl.: C09D 5/03

(54) **Paint composition for thermal drying**

(30) Priority: 14.03.2003 JP 2003069641
(71) Applicant: Nippon Shokubai Co., Ltd., Osaka-shi, Osaka 541-0043 (JP)
(72) Inventor: Morihiro, Shigeyasu, Osaka-shi Osaka 533-0005 (JP); Miyawaki, Yukihiro, Kobe-shi Hyogo 651-1301 (JP); Nagaishi, Dai, Suita-shi Osaka 564-0035 (JP)
(74) Representative: Hubert, Philippe

(57) **Abstract**

It is an object of the present invention to provide the paint composition for thermal drying which is favorable as material forming a thick film since it can develop an excellent thermal drying characteristics.

The present invention is directed to a paint composition for thermal drying, wherein said paint composition comprises an emulsion having a glass transition temperature of 50°C or lower and organic fine particles having a mean particle diameter of 15 µm or smaller.

## Description

### TECHNICAL FIELD

The present invention relates to a paint composition for thermal drying and more specifically to a paint composition for thermal drying which is favorable as a thick film paint composition comprising emulsion.

### PRIOR ART

Paint composition for thermal drying are materials which are widely used in industries since they form films developing various functions on base materials, and among them, a paint composition, comprising an emulsion and being able to form a thick film, is useful as construction materials for the exterior and coating materials absorbing vibrations. However, in thermal drying a film formed by the paint composition for thermal drying comprising an emulsion and particularly in forming a thick film, blisters tend to be generated on the surface of a film, and therefore there is room for a contrivance to prevent the blisters and improve the thermal drying characteristics.

As the conventional paint composition for thermal drying, there is disclosed an aqueous composition for coating, having chipping resistance, which consists of an aqueous dispersion and an inorganic filler with respect to an aqueous dispersion of an acrylic polymer in Japanese Patent Publications No. 2904995 (p. 1-3) . However, such an aqueous composition for coating was not one in which the thermal drying characteristics was improved by preventing the blisters in thermal drying a film and, for example, the inorganic filler was added as a bulk filler in the aqueous composition for coating, and therefore there is room for a contrivance to make the thermal drying characteristics become better.

By the way, emulsions are used as a vibration damping material to prevent vibration and noise of various structures to insure sustained quietude. These emulsions for vibration damping materials have been preferably used as materials which constitute dampening coating formulation, that is, vibration damping material composition and have been used not only beneath the cabin floors of road vehicles but also applied to train cars, ships, aircraft, electric machines, buildings, and construction machines, among other uses. As such vibration damping materials, an inorganic powder-containing asphalt sheet has been installed under automotive cabin flooring, for instance, but since the sheet must be secured in position by thermal fusion, improvements in workability and other parameters are needed.

As the vibtration damping material composition composing a conventional vibration damping material, there is disclosed a copolymer latex containing emulsion in Japanese Kokai Publication Hei-9-104842. In other words, it discloses a water-based vibration damper paint composition comprising at least one vehicle selected from the group consisting of synthetic resin emulsions. Japanese Kokai Publication Hei-11-29737 (page 1,2) discloses a copolymer latex for water-based paints which is obtainable by copolymerizing an aliphatic conjugated diene monomer, an ethylenically unsaturated carboxylic acid monomer, in the presence of α-methylstyrene. Japanese Kokai Publication 2000-178497 (page 1,2) discloses a copolymer latex for chipping-resistant paint which is obtainable by emulsion-polymerizing a monomer mixture comprising a conjugated diene monomer, an ethylenically unsaturated carboxylic acid amide monomer, an ethylenically unsaturated carboxylic acid monomer and other monomers in the presence of an inorganic persulfate polymerization initiator. Japanese Kokai Publication 2000-178498 (page 1,2) discloses a copolymer latex for vibration damping materials which is obtainable by emulsion-polymerizing a conjugated diene monomer, an epoxy group-containing ethylenically unsaturated monomer, an ethylenically unsaturated carboxylic acid alkyl ester monomer, and other monomers. Japanese Kokai Publication 2000-178499 (page 1,2) discloses a copolymer latex for vibration damping materialswhichisobtainablebyemulsion-polymerizingamonomer composition comprising a conjugated diene monomer, an epoxy group-containing ethylenically unsaturated monomer, an ethylenically unsaturated carboxylic amide monomer, and other monomers.

By any of these technologies, however, it is impossible to obtain a vibration damping material which satisfies both thermal drying characteristics and vibration damping properties sufficiently. Thus, when a synthetic resin emulsion or an asphalt emulsion is used and a coating film is formed by thermal drying, blisters tend to form as the vaporized moisture in the undried interior of the coating is forced out through the dried surface so that it is necessary to provide some measure for improving the thermal drying characteristics. When a copolymer latex comprising a conjugated diene monomer and other monomers is used, the conjugated diene monomer unit is not so contributory to the expression of vibration damping properties so that there is room for a contrivance to reconcile satisfactory thermal drying characteristics and satisfactory vibration damping properties.

In addition, Japanese Patent Publications No.2904995 (p.1-3) discloses that with respect to an aqueous dispersion containing acrylic polymer particles which are composite particles comprising a core portion and a cortical layer portion, an aqueous dispersion can be prepared by using a reactive anionic surfactant and such an aqueous dispersion is favorable for forming a chipping material.

Since in such an aqueous dispersion, emphasis is placed on a physical property of a hard film such that the film resists scratches and is hard from the viewpoint of being favorable for forming a chipping material, the viscosity of the dispersion is set at low value so as to be able to perform spray coating. However, as a vibration damping material, high hardness film is better but softness is also required. In addition, a composition for the vibration damping material has the viscosity set at a relatively high value so as to be able to form a thick film. Accordingly, there is room for a contrivance to make the aqueous dispersion favorably applicable as the composition for the damping material, having such the characteristics and in addition to make it have the excellent vibration damping property and thermal drying characteristics and furthermore have less time-course deterioration.

### SUMMARY OF THE INVENTION

The present invention has been made considering the above-mentioned situations, and it is an object of the present invention to provide the paint composition for thermal drying which is favorable as material forming a thick film since it can develop an excellent thermal drying characteristics.

The present inventors noted first that aqueous emulsions were superior in point of workability as a result of studying a paint composition for thermal drying widely, and found that by using the emulsion of which a glass transition temperature is specified to be lower as such an emulsion in order to facilitate a film formation in thermal drying and combining the emulsion with organic fine particles of which a mean particle diameter is specified to be smaller, the occurrence of blister was suppressed and the thermal drying characteristics becomes excellent, and thereby the paint composition becomes favorable as a material forming a thick film, and has come up with the idea that the above-mentioned issues can be well solved. And, with respect to an organic fine particle, the inventors have found that when its melting point by differential scanning calorimetry is specified to be higher in order to prevent the organic fine particle from being fused with emulsion in thermal drying and contributing to film formation, such actions can be adequately developed and reached the present invention. Usually, since in forming a thick film by thermal drying the emulsion, a water content in a yet-to-be dried film is evaporated after the surface of the film is dried, blisters are generated, but in the present invention, it is considered that the above-mentioned organic fine particles are present in the film, and thereby a water content in the film becomes easy to escape when the emulsion forms a film to protect the occurrence of blisters and to improve the thermal drying characteristics.

And, the present inventors noted first that emulsions, which provide aqueous vibration dampingmaterials, were superior in point of workability and the like during studying rawmaterial used in various dampening coating formulation, and have come up with the idea that when a coating material composition comprises an emulsion formed by emulsion polymerizing a monomer component with a reactive emulsifier, thereby, liberation of the emulsifier contained in the emulsion into water being amedium was suppressed and this enabled to provide a emulsion for a vibration damping material composing a dampening coating formulation, which could develop an excellent vibration damping property and also an excellent thermal drying characteristics, and furthermore had less time-course deterioration and could enhance stability and dispersibility of the formulation.

That is, when the emulsifier contained in the emulsion is liberated into water, the emulsifier being a substance of low molecular weight bleeds to the surface of the film and that bleeding portion is only dried faster than another portion in thermal drying to cause a heat blister and the emulsifier is liberated into water with lapse of time, whereby causing the viscosity of the emulsion to decrease. In addition, since the mechanical stability of the emulsion is not good, the formulaion may be gelated in forming a paint by blending it. However, it was found that when an emulsion polymerization is conducted by using a reactive emulsifier, an excellent thermal drying characteristics is developed since the liberation of the emulsifier into water becomes less and the time-course change of the emulsion becomes less since the liberation of the emulsifier with lapse of time becomes less. Furthermore, it was also found that the mechanical stability was improved since the emulsifier is chemically combined with the emulsion.

Further, in a vibration damping material formed from the above-mentioned emulsion for the vibration damping material, by adjusting a glass transition temperature of the emulsion, an effect of enhancing the action to prevent vibrations and noises in various structures and to keep quietness is adequately attained. These actions are considered to result from that the stability and the dispersibility of the emulsion were enhanced and the vibration damping material is composed of the above-mentioned emulsion which is favorable as the emulsion for the vibration damping material.

In the present invention, such an emulsion for the damping material is employed in the paint composition for theral drying.

That is, the present invention is a paint composition for thermal drying, which comprises an emulsion having a glass transition temperature of 50°C or lower and organic fine particles having a mean particle diameter of 15 µm or smaller.

As a preferable aspect of the paint composition for thermal drying in the present invention, there are given an aspect in which the above-mentioned organic fine particles have a melting point by differential scanning calorimetry of 65°C or higher, an aspect in which the above-mentioned emulsion is formed by emulsion polymerizing a monomer component with a reactive emulsifier and an aspect in which the above-mentioned emulsion has a glass transition temperature of -50°C to 40°C.

### DETAILED DESCRIPTION OF THE INVENTION

The present invention is now described in detail.

A paint composition for thermal drying in the present invention is one which forms a film by forming a film with an emulsion having a glass transition temperature (Tg) of 50°C or lower and a thermal drying characteristics of which is improved by organic fine particles having a mean particle diameter of 15 µm or smaller. In addition, term "for thermal drying" means that a composition is favorably used when a film is formed by thermal drying. Apreferable aspect of an organic fine particle in the present invention is a high hardness organic fine particle which has a hardness, not melting or decomposing in thermal drying the paint composition for thermal drying, and is incompatible with a solvent contained in the above-mentioned emulsion or paint composition for thermal drying. By such an organic fine particle, the thermal drying characteristics is improved in forming a film and since the organic fine particles exist in the formed film, basic performances such as rigidity of the film are also improved. Further, such an organic fine particle is hard to inhibit water resistance of a film and thereby the film formed from the paint composition for thermal drying in the present invention is superior in water resistance.

With respect to such the emulsion and organic fine particles, one or two or more thereof, respectively, may be used.

When Tg of the above-mentioned emulsion is more than 50°C, the film formation property and the thermal drying characteristics of the paint composition for thermal drying become insufficient. Preferably, Tg is -50°C or higher and 40°C or lower. More preferably, Tg is -10°C or higher and 20°C or lower. Incidentally, Tg of the emulsion can be calculated from Tg of individual polymer of respective monomers forming the emulsion.

The above-mentioned emulsion is an aqueous one in which a continuous phase is water and polymer formed by polymerizing monomer components is dispersed. Usually, the paint composition for thermal drying is composed of such an emulsion, and another additives, solvents or the like as required.

As a monomer component to form the emulsion in the present invention, it may be appropriately set in such a way that a glass transition temperature of the emulsion is 50°C or lower and preferably it comprises unsaturated carboxylic acid monomer. Though a compound having an unsaturated bond and a carboxyl group in a molecule may be used as the unsaturated carboxylic acid monomer, this monomer preferably contains an ethylenic unsaturated carboxylic acid monomer. A paint composition for thermal drying comprising an emulsion formed by polymerizing a monomer component comprising ethylenic unsaturated carboxylic acid monomer is one of preferable embodiments of the present invention.

As the above-mentioned ethylenic unsaturated carboxylic acid monomer, one, or two or more of unsaturated carboxylic acids or derivatives thereof such as (meth) acrylic acid, crotonic acid, itaconic acid, fumaric acid, maleic acid, monomethyl fumarate, monoethyl fumarate and monomethyl maleate, monoethyl maleate are favorable.

And, the above-mentoned monomer component preferably comprises an acrylic monomer. The acrylic monomer means (meth) acrylic acid derivatives such as (meth) acrylic acid and (meth)acrylate ester.

Preferably, a content of an acrylic monomer in the above-mentioned monomer component is set so as to be 50 mass % or more with respect to total monomer components. With a content of such a monomer component, when the monomer is used as exterior materials for the construction materials, a content of a conjugate dienic monomer is preferably 10 mass % or less with respect to total monomer components from the viewpoint of dry blistering. More preferably, it is 5 mass % or less, and most preferably, the monomer component does not contain the conjugate dienic monomer.

Furthermore, the above-mentioned monomer component preferably contains an unsaturated monomer having a functional group in an amount of less than 10 mass % with respect to total monomer components. The functional group in the unsaturated monomer having a functional group may be a functional group which can crosslink in obtaining the emulsion by polymerization. An action of such a functional group allows the film formation property and the thermal drying characteristics of the emulsion to improve. More preferably, it is 0.1 to 3.0 mass %.

Incidentally, the above-mentioned mass rate is a mass rate with respect to 100 mass % of the total monomer components.

As the above-mentioned functional group, an epoxy group, an oxazoline group, a carbodiimide group, an aziridinyl group, an isocyanate group, a methylol group, a vinyl ether group, a cyclocarbonate group and an alkoxysilane group are favorable. One or two or more of these functional groups may be contained in a molecule of the unsaturated monomer.

The above-mentioned unsaturated monomer having a functional groups, for example, may be any of the following polyfunctional unsaturated monomers: divinylbenzene, ethylene glycol di(meth)acrylate, N-methoxymethyl(meth)acrylamide, N-methxoyethyl(meth)acrylamide, N-n-butoxymethyl(meth)acrylamide, N-i-butoxymethyl(meth)acrylamide, N-methylol(meth)acrylamide, diallyl phthalate, diallyl terephthalate,polyethyleneglycoldi(meth)acrylate,propylene glycol di(meth)acrylate, polypropylene glycol di(meth)acrylate, tetramethylene glycol di(meth)acrylate, polytetramethylene glycol di(meth)acrylate, 1,6-hexanediol di (meth) acrylate, neopentyl glycol di (meth) acrylate, and so on; glycidyl group-containing unsaturatedmonomers such as glycidyl (meth)acrylate and acryloyl glycidyl ether. Among these, unsaturated monomers having not less than two functional groups (polyfunctional unsaturated monomers) are preferred. These can be used each independently or in a combination of two or more species.

In the present invention, preferably, the above-mentioned monomer component contains an ethylenic unsaturated carboxylic acid monomer in an amount of 0.1 to 20 mass % and other copolymerizable ethylenically unsaturated monomer in an amount of 99. 9 to 80 mass %. By containing the ethylenic unsaturated carboxylic acid monomer, it becomes possible to enhance the dispersibility of the organic fine particles and to develop actions of the present invention more adequately in the paint composition for thermal drying comprising such an emulsion. Further, by containing other copolymerizable ethylenically unsaturated monomer, an acid value, Tg, physical properties or the like of the emulsion becomes easy to adjust. In the above-mentioned monomer component, when the content of the ethylenic unsaturated carboxylic acid monomer is less than 0.1 mass % or more than 20 mass %, there is a possibility that the emulsion cannot stably copolymerize.

Incidentally, the above-mentioned mass rate is amass rate with respect to 100 mass % of the total monomer components.

As said other copolymerizable ethylenically unsaturated monomer or monomers, it is preferable to use one or more species of the functional group-containing unsaturated monomers mentioned above; (meth)acrylic acid esters such as methyl (meth)acrylate, ethyl (meth)acrylate, butyl (meth)acrylate, 2-ethylhexyl (meth) acrylate, cyclohexyl (meth) acrylate, etc.; and aromatic unsaturated monomers such as styrene.

As the polymerizing method for the above-mentionedmonomer component, the emulsion polymerization method, among others, can be used advantageously. The mode of emulsion polymerization may comprise adding the monomer component, a polymerization initiator and a surfactant to an aqueous medium judiciously and conducting the polymerization reaction. For molecular weight adjustment, a chain transfer agent may be employed.

The aqueous medium mentioned above is preferably water, a mixture solvent composed of one or more water-miscible solvents, or a mixture solvent consisting of such a solvent and a predominant proportion of water. Among these, water is preferred.

Asthe polymerizationinitiator mentioned above,theknown water-soluble or oil-soluble initiator, such as ammonium persulfate, potassium persulfate, hydrogen peroxide, butyl hydroperoxide or the like, can be used with advantage. To accelerate the emulsion polymerization, a redox initiator system may be formed by adding sodium hydrogensulfite or L-ascorbic acid as a reducing agent. These may be used each independently or in a combination of two or more species.

The level of use of said polymerization initiator may be judiciously selected according to the kind of initiator but, based on 100 weight parts of the total monomer composition, is preferably 0.1 to 2 weight parts, more preferably 0.2 to 1 weight part.

The surfactant mentioned above may be any of anionic, nonionic, and nonionic-anionic emulsifiers. In terms of the stability of emulsion polymerization, nonionic emulsifiers and nonionic-anionic emulsifiers are preferred among them, and more preferably a nonionic emulsifier and a nonionic-anionic emulsifier are used together. The anionic emulsifier includes, for example, fatty acid soaps, rosin soaps, alkylsulfonic acid soaps, dialkylarylsulfonate, alkylsulfosuccinate, and polyoxyethylene-alkylsulfate, among others. The nonionic emulsifier includes, for example, polyoxyethylene alkyl ethers, polyoxyethylene alkylaryl ethers, polyoxyethylene sorbitan fatty acid esters, and oxyethylene-oxypropylene block copolymers, among others. These surfactants can be used each independently or in a combination of two or more species.

The level of use of such surfactant can be judiciously selected according to the kind of surfactant, among other factors, but based on 100 weight parts of the total monomer composition, is preferably 0.05 to 5.0 weight parts, more preferably 0.1 to 3 weight parts.

The above-mentioned polymerization chain transfer agent may be any of alkylmercaptans, e.g. hexylmercaptan, octylmercaptan, n-dodecylmercaptan, t-dodecylmercaptan, n-hexadecylmercaptan, n-tetradecylmercaptan, etc.; halogenated hydrocarbons, e.g. carbon tetrachloride, carbon tetrabromide, ethylene bromide, etc.; mercaptocarboxylic acid alkyl esters, e.g. 2-ethylhexyl mercaptoacetate, 2-ethylhexyl mercaptopropionate, tridecyl mercaptopropionate, etc.; mercaptocarboxylic acid alkoxyalkyl esters, e.g. methoxybutyl mercaptoacetate, methoxybutyl mercaptopropionate, etc.; carboxylic acid mercaptoalkyl esters, e.g. 2-mercaptoethyl octanoate etc.; α-methylstyrene dimer, terpinolene, α-terpinene, γ-terpinene, dipentene, anisole, and allyl alcohol, among others. These can be used each independently or in a combination of two or more species. Among these, it is preferable to use an alkylmercaptan such as hexylmercaptan, octylmercaptan, n-dodecylmercaptan, t-dodecylmercaptan, n-hexadecylmercaptan, n-tetradecylmercatan or the like. The level of use of the polymerizaitn chain transfer agent based on 100 weight parts of the total monomer composition is generally 0 to 1 weight part, preferably 0 to 0.5 weight part.

The above-mentioned emulsion polymerization may be carried out in the presence of a chelating agent such as sodium ethylenediaminetetracetate, a dispersant such as poly(sodium acrylate), and/or an inorganic salt. As to the mode of addition of the monomers, for example, polymerization initiator, etc., any of en bloc addition, continuous addition, multistage addition, etc. may be employed. These modes of addition may be used in a suitable combination.

Regarding the reaction conditions to be used for said emulsion polymerization, the optimum conditions can be selected according to the monomer formulation, the kind of polymerization initiator, and other factors. The polymerization temperature is preferably 5 to 90°C, more preferably 20 to 85°C. The preferred polymerization time is 3 to 8 hours. The polymerization and dropwise additions are preferably carried out under stirring.

In the above process, the emulsion prepared by emulsion polymerization as above is preferably neutralized with a neutralizing agent, whereby the emulsion is stabilized. The neutralizing agent which is preferably employed includes tertiary amines, such as triethanolamine, dimethylethanolamine, diethylethanolamine, morpholine, etc.; aqueous ammonia; sodium hydroxide; and so forth. These can be used each independently or in a combination of two ormore species. Among these, volatile bases which will be evaporated off on heating in the thermal drying of the film are preferred because these are conducive to an enhancement in the blistering property of the film on heating in the thermal drying formed from a paint composition for thermal drying. More preferably, it is advantageous to use an amine whose boiling point at 80 to 360°C, for it contributes to improved thermal drying characteristics and improved dry blistering properties. Thus, as the neutralizing agent, a tertiary amine such as triethanolamine, dimethylethanolamine, diethylethanolamine, morpholine or the likeispreferred. Morepreferably, anaminewhoseboilingpoint at 130 to 170°C is employed.

The boiling point referred to above is the boiling point at atmospheric pressure.

The preferred level of addition of said neutralizing agent is 0.6 to 1.4 equivalents relative to the acid value of the emulsion, namely to 1 equivalent of the acid radical in the emulsion. The more preferred level is 0.8 to 1.2 equivalents.

Preferably, the above-mentioned emulsion has a gel fraction of 0 to 45 mass %, measured with a toluene solvent. The gel fraction in the present invention is an index which represents the solubility of a film formed from an emulsion in a toluene solvent, and the solubility in a toluene solvent is lowered as the gel fraction increases. The gel fraction reflects a molecular structure of resin and when the gel fraction of emulsion is more than 45 mass %, there is a possibility that the film formation property may be deteriorated.

The gel fraction referred to above is preferably determined by a method of quantitating toluene-insolubles, for example as described below.

### <Method for determination of the gel fraction (toluene-insolubles)>

The emulsion is cast into a 0.2 cm-deep frame on a sheet of releasing paper to mold a 0.2 cm-thick film. This film was cut to 2 cm (L) × 2 cm (W) × 0.2 cm (T) to prepare a test film. This test film was immersed in 100 ml of toluene and agitated for 6 hours using a magnetic stirrer at room temperature. The mixture was then filtered through a 100-mesh metal sieve and the solid matter of the filtrate is quantitated to calculate the gel fraction.

The emulsion mentioned above is preferably such that when it is formulated into a dampening coating formulation as described above, the loss factor (loss tangent: tan δ) of the dampening coating formulation will be not less than 0.15. Thus, when the emulsion according to the present invention is formulated into a dampening coating formulation described below, the loss factor (tan δ) of the film formed from the dampening coating formulation is preferably not less than 0.15. With respect to the vibration dampering properties, the loss factor of the currently used steel panel which is covered with asphalt sheet of 2mm thickness is about 0.1 and more than this value is generally required. The vibration damping properties, that is loss factor, of the film is correlated with the tan δ of the film used, and it is thought that the higher the tan δ value of the film is, the higher is the vibration damping properties of the film.

If said loss factor (tan δ) is less than 0.15, acceptable vibration damping properties may not be expressed in a water-based vibration damping material. The loss factor is more preferably not less than 0.16, still more preferably not less than 0.18.

### <Composition of the dampening coating formulation>

Emulsion 100 weight parts
Calcium carbonate: NN#200 (trademark, product of Nitto Powder Industry Co.) 250 weight parts
Dispersant: Demol EP (trademark, product of Kao Corporation) 1 weight part
Thickener: Acryset AT-2 (trademark, Nippon Shokubai Co.) 2 weight parts
Antifoaming agent: Nopco 8034L (trademark, product of Sun Nopco Co.) 0.3 weight part

### <Method for determination of loss factor (tan δ)>

The above dampening coating formulation was poured into a 3 mm-deep frame on a cationically electrocoated steel panel (15 mm (W) × 250 mm (L) × 0.8 mm (T)) and dried at 150°C for 30 minutes to prepare a testpiece. Using Ono Instrument's loss factor determination system and a cantilever method, the loss factor of the testpiece in a 25°C measuring environment was determined.

Organic fine particles, which are components of the paint composition for thermal drying in the present invention, have a mean particle diameter of 15 µm or smaller. When the mean particle diameter is larger than 15 µm, in drying the paint composition for thermal drying, an effect of suppressing the occurrence of blister becomes insufficient. Preferably, the mean particle diameter is not less than 0.01 µm and not more than 13 µm. More preferably, it is not less than 0.05 µm and not more than 12 µm. Furthermore preferably, it is not less than 0.1 µm and not more than 10 µm.

As the above-mentioned organic fine particle, a high hardness emulsion having a glass transition temperature of higher than 50°C and a crosslinked substance are favorable. As the high hardness emulsion having a glass transition temperature of higher than 50°C, there is given (meth)acrylic acid base emulsion or the like, and as the crosslinked substance, there is given polymethyl (meth)acrylate-based crosslinked substances etc.. Among them, it is preferred to use a high hardness micro gel which has a hardness, not melting or decomposing in thermal drying the paint composition for thermal drying, and is incompatible with a solvent contained in the above-mentioned emulsion or paint composition for thermal drying.

As a preferable aspect of the above-mentioned organic fine particles, there is given one have a melting point by differential scanning calorimetry (DSC) of 65°C or higher. When the melting point is less than 60°C, there is a possibility that an effect of suppressing the occurrence of blister may not become sufficient since there is a possibility that the organic fine particles may melt in thermal drying the paint composition for thermal drying. More preferably, the melting point is not less than 70°C and not more than 120°C. Furthermore preferably, it is not less than 80°C and not more than 110°C. In addition, DSC is preferablymeasured in the followingmeasuring conditions.

### <Measuring conditions of differential scanning calorimetry>

### Apparatus: DSC 6200 (trade mark, product of Seiko Instruments Inc.)

Measuring temperature: a temperature is raised at a speed of 20°C/minute from -100 to 110°C and a melting point is measured.

A glass transition temperature (Tg) of the above organic fine particle is preferably 60°C or higher. More preferably, Tg is 65°C or higher and 90°C or lower. Furthermore preferably, Tg is 70°C or higher and 80°C or lower. As such an organic fine particle, a (meth)acrylic emulsion is favorable.

The paint composition for thermal drying in the present invention may be produced by mixing the above-mentioned emulsion having a glass transition temperature of 50°C or lower and the organic fine particles having a mean particle diameter of 15 µm or smaller, which are described above, with an additive, a solvent or the like as required.

Though an blending amount of the emulsion having a glass transition temperature of 50°C or lower in the paint composition for thermal drying in the present invention may be appropriately set depending on uses and desired physical properties of the paint composition for thermal drying, preferably, the blending amount of the emulsion is set in such a way that a solid matter content of the emulsion having a glass transition temperature of 50°C or lower is 7 mass % or more with respect to 100 mass % of the paint composition for thermal drying and 50 mass % or less. More preferably, it is set in such a way that the solid matter content of the emulsion is 13 mass % or more and 30 mass % or less. And, preferably, an blending amount of the organic fine particles is set in such a way that a solid matter content of the organic fine particles is 1.0 mass % or more and 20 mass % or less with respect to 100 mass % of the above-mentioned solid matter content of the emulsion having a glass transition temperature of 50°C or lower. When the solid matter content of the organic fine particles is less than 1.0 mass %, there is a possibility that the thermal drying characteristics may not be improved sufficiently and also there is a possibility that water resistance and rigidity of a film formed from the paint composition for thermal drying may not be improved sufficiently. When it is more than 20 mass %, there is a possibility of depressing a film formation property. More preferably, it is 2.0 mass % or more and 10.0 mass % or less.

As above-mentioned additives, there can be mentioned, for example, the filler, colorant, aseptic, dispersant, thickener, thioxtropic agent, antifreezing agent, pH control agent, antifoam, wetting agent, rust inhibitor, and adhesive mass, among others. These may be used each alone or in a combination of two or more species. Among these, the filler is preferably formulated.

The filler mentioned above includes inorganic fillers such as calcium carbonate, kaolin, silica, talc, barium sulfate, alumina, iron oxide, titanium oxide, glass powder, etc.; flaky inorganic fillers such as glass flakes, mica, etc.; and filamentous inorganic fillers such asmetal oxide whiskers, glass fibers and so forth.

The formulating level of the filler is preferably 50 to 400 weight parts based on 100 weight parts of a solid matter content of the emulsion having a glass transition temperature of 50 °C or lower. The more preferred level is 100 to 350 weight parts on the same basis.

The solvent mentioned aboveisnot particularly restricted provided that the operation and effect of the present invention can be insured, and one or more solvent species can be employed. The formulating level of the solvent may be appropriately set depending on uses and desired physical properties of the paint composition for thermal drying.

As for the equipment used for the production of the paint composition for thermal drying in the present invention, the butterfly mixer, planetary mixer, spiral mixer, kneader and Dissolver are preferred.

The paint composition for thermal drying in the present invention is favorable as a thick film material since it can develop an excellent thermal drying characteristics.

A film thickness of a dried film formed from the paint composition for thermal drying in the present invention may be appropriately set depending on uses of the film, preferably, it is set to be 0.5 mm or more and 8.0 mm or less. More preferably, it is set to be 1.5 mm or more and 6.0 mm or less.

In order to form such a film, it is preferred to employ 100 Pa·s or higher and 500 Pa·s or lower as the viscosity of the paint composition for thermal drying. It is more preferably to employ 120 Pa·s or higher and 250 Pa·s or lower. And, in applying the paint composition for thermal drying to the base material and drying it, the brush, spatula, air spray gun, airless spray gun, mortar gun, texture gun, etc. can be used for coating, and coating by air spray and the like is preferred.

As conditions of applying the paint composition for thermal drying in the present invention and then drying it to form a film, the film may be dried by thermal drying or dried at room temperature but thermal drying is preferable in point of efficiency, and is favorable because of an excellent thermal drying characteristics in the present invention. For example, in the case of using the paint composition to exterior mat4rials such as constructionmaterials, drying temperature is preferably set at 70 to 210°C, more preferably 110 to 180°C. And in the case of forming the vibration damping material, drying temperature is preferably set at 80 to 210°C, more preferably 110 to 160°C.

The paint composition for thermal drying in the present invention is favorable as exteriormaterials such as construction materials, coating materials absorbing vibrations and the like since it has an excellent thermal drying characteristics.

Next, an emulsion for the vibration damping material, which is suitable for the paint composition for thermal drying in the present invention, will be described. Though such an emulsion for the vibration damping material may be favorably used as an emulsion composing the paint composition for thermal drying in the present invention, it has an industrial applicability to an emulsion for the vibration damping material and is useful.

The above-mentioned emulsion for the vibration damping material contains an emulsion obtained by emulsion polymerizing using one comprising a reactive emulsifier as an emulsifier in emulsion polymerizing the monomer component using a emulsifier. As the above-mentioned emulsifier, one comprising a reactive emulsifier may be used, but it is preferable to use one based on the reactive emulsifier and it is most preferable that all of the emulsifier used in emulsion polymerizing the monomer component is a reactive emulsifier.

By such an emulsion for the vibration damping material, it is possible to improve the stability, the dispersibility and the thermal drying characteristics and also to improve the vibration damping property of the damping material formed from the dampening coating formulation comprising such an emulsion for the vibration damping material.

As the above-mentioned reactive emulsifier, reactive anionic surfactants, sulfosuccinate type reactive anionic surfactants, and alkenyl succinate type reactive anionic surfactants are preferred and one, or two or more of them may be used.

As commercial products of the sulfosuccinate type reactive anionic surfactant, there are given LATEMUL S-120, S-120A, S-180 and S-180A (each trade mark, products of Kao Corporation), ELEMINOL JS-2 (trade mark, product of Sanyo Kasei Co., Ltd.) and the like. As commercial products of the alkenyl succinate type reactive anionic surfactant, there is given LATEMUL ASK (trade mark, product of Kao Corporation).

As the above-mentioned reactive emulsifier, the following surfactants are favorable.

Surfactants in the form of sulfoalkyl (1 to 4 carbon atoms) ester salt of aliphatic unsaturated carboxylic acid having 3 to 5 carbon atoms, for example, sulfoalkyl (meth) acrylate ester type surfactants such as sodium 2-sulfoethyl (meth) acrylate and ammonium 3-sulfopropyl (meth) acrylate; Surfactants in the form of alkylsulfoalkyl diester salt of aliphatic unsaturated dicarboxylic acid such as alkyl ester sodium sulfopropylmaleate, polyoxyethylene alkyl ester ammonium sulfopropylmaleate and polyoxyethylene alkyl ester ammonium sulfoethylfumarate.

Dipolyethyleneglycol maleate alkylphenol ether sulfate ester salt, dihydroxyethyl phthalate (meth)acrylate sulfate ester salt, 1-allyloxy-3-alkylphenoxy-2-polyoxyethylene sulfate ester (trademark: ADEKARIASOAP SE-10N, product of Asahi Denka Co., Ltd.), polyoxyethylene alkylalkenyl phenol sulfate ester (trade mark: AQUARON, product of Daiichi Kogyo Seiyaku Co., Ltd.)

In the above-mentioned emulsion for the vibration damping material, a reactive emulsifier, which has an addition structure of ethylene oxide, is preferably used because the emulsion becomes high in ability to be mixed with pigment, filler and the like by this emulsifier. The stability to pigment, filler and the like is enhanced by the addition structure of ethylene oxide. As such a reactive emulsifier, for example, α-hydro-ω-[2-(1-propenyl)-4-nonyl-phenoxy]polyoxyethylene (trade mark: AQUARON, product of Daiichi Kogyo Seiyaku Co., Ltd.), etc. is preferred.

In the case the vibration damping material is formed using the above-mentioned emulsion, usually, the vibration damping material is formed by applying an emulsion for the damping material comprising such an emulsion and a dampening coating formulation containing another additives and solvents as required.

As the monomer component to form the above-mentioned emulsion, it is preferable to contain ethylenic unsaturated carboxylic acid monomer described above, and in addition the above-mentioned monomer component preferably contains an ethylenic unsaturated carboxylic acid alkyl ester monomer in an amount of 32 mass % or more. By an action of the ethylenic unsaturated carboxylic acid alkyl ester monomer, Tg and physical properties of the emulsion for the vibration damping material become easy to adjust. An upper limit of the above-mentioned mass rate of the ethylenic unsaturated carboxylic acid alkyl ester monomer is preferably 90 mass % or lower. More preferably, it is 60 mass % or lower. By containing the ethylenic unsaturated carboxylic acid monomer, it becomes possible to enhance the dispersibility of the filler such as an inorganic powder and to improve the vibration damping property more in the dampening coating formulation comprising the above-mentioned emulsion for the vibration damping material.

In the above-mentioned emulsion, it becomes possible to develop excellent thermal drying characteristics and vibration dampingpropertymoresufficientlyinanaqueousdampingmaterial through a synergism of effects of monomer units formed from these monomers.

The above-mentioned ethylenic unsaturated carboxylic acid alkyl ester monomer is not particulary restricted and, for example, one, or two or more of an unsaturated monomer having the above-mentioned functional group and (meth) acrylate esters such as methyl(meth)acrylate, ethyl(meth)acrylate, butyl(meth)acrylate, 2-ethylhexyl(meth)acrylate and cyclohexyl(meth)acrylate can be given.

As the monomer contained in the monomer component to form the above-mentioned emulsion, one, or two or more of aromatic unsaturated monomers such as styrene, etc. may be used other than monomers described above.

As a method of producing the above-mentioned emulsion, a monomer component is polymerized by emulsion polymerization in the presence of the reactive emulsifier, but a form of emulsion polymerizing is not particulary restricted and the emulsion polymerization can be conducted in the form described above.

Further, in conducting the above-mentioned emulsion polymerization, a non-reactive emulsifier may be used together with a reactive emulsifier and as the non-reactive emulsifier, any of an anionic emulsifier, a nonionic emulsifier and nonionanionic emulsifier may be used.

An amount of the emulsifier used comprising the reactive emulsifier is similar to that of a surfactant in emulsion polymerization described above.

In the method of producing the above-mentioned emulsion, after an emulsion is produced by emulsion polymerization, the emulsion is preferably neutralized with a neutralizer and as the neutralizer, the above-mentioned one may be used, but it is preferable to use a volatile bases which will be evaporated off on heating in the thermal drying of the film because water resistance of a film formed from the dampening coating formulation comprising the emulsion for the vibration damping material is improved. More preferably, it is preferable to employ amine having a boiling point of 80 to 360°C because it improves the thermal drying characteristics and the vibration damping property. As such a neutralizer, for example, tertiary amines such as triethanolamine, dimethylethanolamine, diethylethanolamine and morpholine are preferred. It is more preferable to employ amine having a boiling point of 130 to 280°C.

In addition, the above-mentioned boiling point is a boiling point at atmospheric pressure.

An amount of addition of the above-mentioned neutralizer is similar to that described above.

When the number average molecular weight of above-mentioned emulsion is small, the mutual affinity of the filler, e. g. an inorganic powder, and the emulsion is enhanced to improve dispersibility in the dampening coating formulation containing the above-mentioned emulsion for vibration damping material which comprises the emulsion.

In the above-mentioned emulsion for the vibration damping material, it is preferable that the above-mentioned emulsion has a Tg of -50 to 40°C. That is, it is preferable that a glass transition temperature (Tg) of an overall emulsion composing the above-mentioned emulsion for the vibration damping material falls within the above range. Thereby, a loss factor of the dampening coating formulation becomes preferable and it becomes possible to develop an excellent vibration damping property. If the above Tg is below -50°C or over 40°C, sufficient vibration damping property may not be expressed. The more preferably, Tg is not less than -10 and not more than 20 °C. The Tg of an emulsion can be calculated from the Tg values of homopolymers of the respective monomers constituting the emulsion.

And, preferably, the above-mentioned emulsion for the vibration damping material comprises the emulsion having a high glass transition temperature (Tg), and also includes the emulsions having a high Tg and a low Tg, respectively.

As the above-mentioned emulsion having a high Tg, an emulsion having a Tg of 0°C or higher and 50°C or lower is preferable. More preferably, Tg is 0°C or higher and 30°C or lower. As the above emulsion having a low Tg, an emulsion having a Tg of -50°C or higher and 10°C or lower is preferable. More preferably, Tg is -20°C or higher and 0°C or lower.

Thus, an emulsion for the vibration damping material, which includes two or more emulsions having different glass transition temperatures (Tg) and includes the emulsions having a high Tg and a low Tg, respectively, as described above, can sufficiently develop various basic performance such as a vibration damping property, etc. in the emulsion for the damping material.

As the above-mentioned emulsion having a high Tg, it is preferred to employ the emulsion formed by emulsion polymerizing a monomer component with the above-mentioned reactive emulsifier, and as the above-mentioned emulsion having a low Tg, an emulsion containing a reactive emulsifier can be used but, not specifically limited, commercially available products such as SBR and acrylic emulsion may be used.

The above-mentioned emulsion for the vibration damping material is one which can produce a dampening coating formulation byblending the emulsionwith an additive or a solvent as required. Such a dampening coating formulation, in which the above-mentioned emulsion for the vibration damping material is essential, is one of preferable embodiments of the present invention.

The dampening coating formulation comprising the above-mentioned emulsion for the vibration damping material can be produced by mixing the emulsion for the vibration damping material with the above-mentioned additive or solvent and so forth.

A blending amount of the emulsion for the damping material in the above-mentioned dampening coating formulation is preferably set, for example, in such a way that a solid matter content of the emulsion for the damping material is 30 to 60 mass % with respect to 100 mass % of the dampening coating formulation. And, a solidmatter concentration of the dampening coating formulation is preferably set, for example, to be 10 to 40 mass % with respect to 100 mass % of the dampening coating formulation.

A blending amount of the additive is similar to that described above, and an amount of addition of the solvent is preferably set, for example, in such a way that a solid matter concentration of the dampening coating formulation is 50 to 400 parts by weight per 100 parts by weight of a solid matter of the emulsion, more preferably 100 to 350 parts by weight.

An apparatus used for producing the above-mentioned dampening coating formulation is not particulary restricted and, for example, an apparatus used for producing the above-mentioned paint composition for thermal drying can be used.

The above-mentioned dampening coating formulation develops excellent characteristics such as a thermal drying characteristics and the like and will form a coat to act as a vibration damping material by being applied to the base material and dried. Such an aqueous vibration damping material, which is formed from the dampening coating formulation comprising the above-mentioned emulsion for the vibration damping material, is one of preferable embodiments of the present invention.

In the above-mentioned aqueous vibration damping material, it is preferred to form a film thickness of a coating dried so as to be 0.5 to 5.0 mm, more preferably 1.5 to 4.5 mm. In order to form such an aqueous vibration damping material, it is preferred to employ 50,000 to 200,000 mPa·s (BM type viscometer, rotor 2, 20 rpm) as the viscosity of the dampening coating formulation. It is more preferably to employ 100,000 to 150, 000 mPa·s. And, in applying the above dampening coating formulation to the base material and drying it, as a method of applying it, it is possible to employ, for example, a method similar to that in applying the paint composition for thermal drying in the present invention to the base material described above, but it is preferable to coat by using slit extrusion etc.

As conditions of applying the above-mentioned dampening coating formulation and then drying it to form a coat, there can be used the similar conditions as that of applying the paint composition for thermal drying and then drying it to form a film.

A use of the dampening coating formulation comprising the above-mentioned emulsion for the vibration damping material is not particulary restricted and it can be preferably applied to, for example, train cars, ships, aircrafts, electric equipment, construction structures, construction machines, etc., in addition to beneath the cabin floor of road vehicles since it can develop excellent thermal drying characteristics and vibration damping property.

With respect to any of the above-mentioned element in the present invention, the present invention may suitably "comprise", "consist of", or "consist essentially of" the element.

Since the paint composition for thermal drying in the present invention is constituted as described above, it can develop an excellent thermal drying characteristics, it is preferable as material forming a thick film and can be favorably applied to various uses such as exterior materials such as construction materials and coating materials absorbing vibrations.

And, since the emulsion for the vibration damping material is constructed as described above, it can be favorably used as a component composing the dampening coating formulation. Further, the dampening coating formulation comprising such an emulsion for the vibration damping material can develop an excellent vibration damping property and also an excellent thermal drying characteristics, and furthermore it has less time-course deterioration and can enhance the stability and the dispersibility of the formulation, and therefore it can be applied to train cars, ships, aircrafts, electric equipment, construction structures, construction machines, etc., in addition to beneath the cabin floor of road vehicles.

### BEST MODE FOR CARRYING OUT THE INVENTION

Hereinafter, the present invention will be described in more detail by way of examples, but the present invention is not limited to these examples. In addition, "part" refers to "part by weight" and "%" refers to "mass %" unless otherwise indicated. Synthetic Example 1 (Polymerization example of a base acrylic emulsion)

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the dropping funnel was charged with a monomer emulsion composed of 126.9 parts of methyl methacrylate, 253.9 parts of styrene, 147.3 parts of 2-ethylhexyl acrylate, 5. 4 parts of glycidyl methacrylate, 5.4 parts of acrylic acid, 53.8 parts of 20% aqueous solution of Hitenol N-08 (trademark, a polyoxyethylene alkyl ether sulfate ester salt; product of Dai-Ichi Kogyo Seiyaku Co.) previously prepared, 21.5 parts of 25% aqueous solution of Nonipol 200 (trademark, apolyoxyethylene phenyl ether, product of Sanyo Chemical Industries Co.), and 129.3 parts of deionized water. Then, with the separable flask being held at an internal temperature of 70°C, the above monomer emulsion was added uniformly dropwise over 3 hours. At the same time, 53. 9 parts of 5% aqueous solution of potassium persulfate and 40 parts of 2% aqueous solution of sodium hydrogensulfite were added uniformly dropwise over 3 hours. After completion of dropwise addition, the reaction mixture was incubated for ripening at 76°C for 3 hours. After cooling, 5.1 parts of 25% aqueous ammonia was added. The emulsion was cooled and taken out through a 100-mesh stainless steel filter screen, whereby an aqueous resin (emulsion) was obtained. The nonvolatile matter content, a pH and viscosity of the resulting aqueous resin were 55.1%, 8.8 and 500 mPa·s, respectively.

### Example 1

5 parts of spherical organic fine particles, EPOSTAR MA1013 (trade mark, a polymethyl methacrylate base crosslinked substance, mean particle diameter 12 to 15 µm, product of Nippon Shokubai Co., Ltd.) , was added to 100 parts of the above-mentioned emulsion and a paint was formed from this mixture according the following formulation to obtain an acrylic resin emulsion.

### Example 2

5 parts of spherical organic fine particles, EPOSTAR MA1002 (trade mark, a polymethyl methacrylate base crosslinked substance, mean particle diameter 2 to 3 µm, product of Nippon Shokubai Co., Ltd.), was added to 100 parts of the above-mentioned emulsion and a paint was formed from this mixture according the following formulation to obtain an acrylic resin emulsion.

### Example 3

10 parts of spherical organic fine particles, EPOSTAR MA1002 (trade mark, a polymethyl methacrylate base crosslinked substance, mean particle diameter 2 to 3 µm, product of Nippon Shokubai Co., Ltd.), was added to 100 parts of the above-mentioned emulsion and a paint was formed from this mixture according the following formulation to obtain an acrylic resin emulsion.

### Example 4

10 parts of spherical organic fine particles, EPOSTAR MA 100W (trade mark, a polymethyl methacrylate base crosslinked substance, emulsion type, concentration 10%, mean particle diameter 0.15 to 0.20 µm, product of Nippon Shokubai Co., Ltd.), was added to 100 parts of the above-mentioned emulsion and a paint was formed from this mixture according the following formulation to obtain an acrylic resin emulsion.

### Example 5

5 parts of high hardness acryl emulsion, EMN-11E (trade mark, acryl emulsion, Tg = 83.6°C, concentration 42.6%, mean particle diameter 0.1 to 0.2 µm, product of Nippon Shokubai Co., Ltd.), was added to 100 parts of the above-mentioned emulsion and a paint was formed from this mixture according the following formulation to obtain an acrylic resin emulsion.

### Example 6

10 parts of high hardness acryl emulsion, EMN-11E (acryl emulsion, Tg = 83.6°C, concentration 42.6%, mean particle diameter 0.1 to 0.2 µm, product of Nippon Shokubai Co., Ltd.), was added to 100 parts of the above-mentioned emulsion and a paint was formed from this mixture according the following formulation to obtain an acrylic resin emulsion.

### Comparative Examples 1 to 3

A paint was formed from the mixture to obtain an acrylic resin emulsion following the same procedure as Examples 1 to 6 except for using the formulation as shown in Table 1.

With respect to the acrylic resin emulsions obtained in the Examples 1 to 6 and Comparative Examples 1 to 3, the following evaluation tests were conducted. These results were as shown in Tables 1.

The acrylic resin emulsions obtained in the Examples 1 to 6 and Comparative Examples 1 to 3 were blended as follows to form water-based paint compositions and thermal drying characteristics and damping properties were verified.
Acrylic resin emulsion 100 parts
Calcium carbonate: NN#200 (trademark, product of Nitto Powder Industry Co.) 250 parts
Dispersant: Demol EP (trademark, product of Kao Corporation) 1 parts
Thickener: Acryset AT-2 (trademark, product of Nippon Shokubai Co.) 2 parts
Antifoaming agent: Nopco 8034L (trademark, product of Sun Nopco Co.) 0.3 part

### (Thermal drying characteristics)

Each of the above-mentioned water-based paint compositions was applied on to a substrate (70mm wide x 150mm long x 0.8mm thick) of SPCC-SD (dull rigid sheet: product of Nippon Testpanel Co.,Ltd.) in such a way that a film thickness after drying is 1.5 mm, 3.0 mm or 4.5 mm and dried at 160°C for 30 minutes to form a film. The surface of the film dried was observed visually.

### Evaluation criteria

ⓞ: film not having blister throughout its surface
○ : film having less than four to five blisters of 2 to 3 mm in diameter
Δ : film having five or more blisters of 4 to 10 mm in diameter
× : film having blisters throughout its surface

### (Loss factor)

Each of the above-mentioned water-based paint compositions was poured into a form having a thickness of 1.5 mm, 3.0 mm or 4.5 mm on a cold-rolled steel panel (SPCC, 15mm wide × 250mm long × 0.8mm thick) and dried twice at 150°C for 25 minutes to form a film of 1.5mm, 3.0 mm or 4.5 mm in thickness on the cold-rolled steel panel. A vibration damping properties was evaluated by measuring tan δ by the cantilever method in a measuring environment of 25°C using Ono Instrument's loss factor determination system. Thus, the larger the loss factor value is, the more satisfactory is the vibration damping properties.

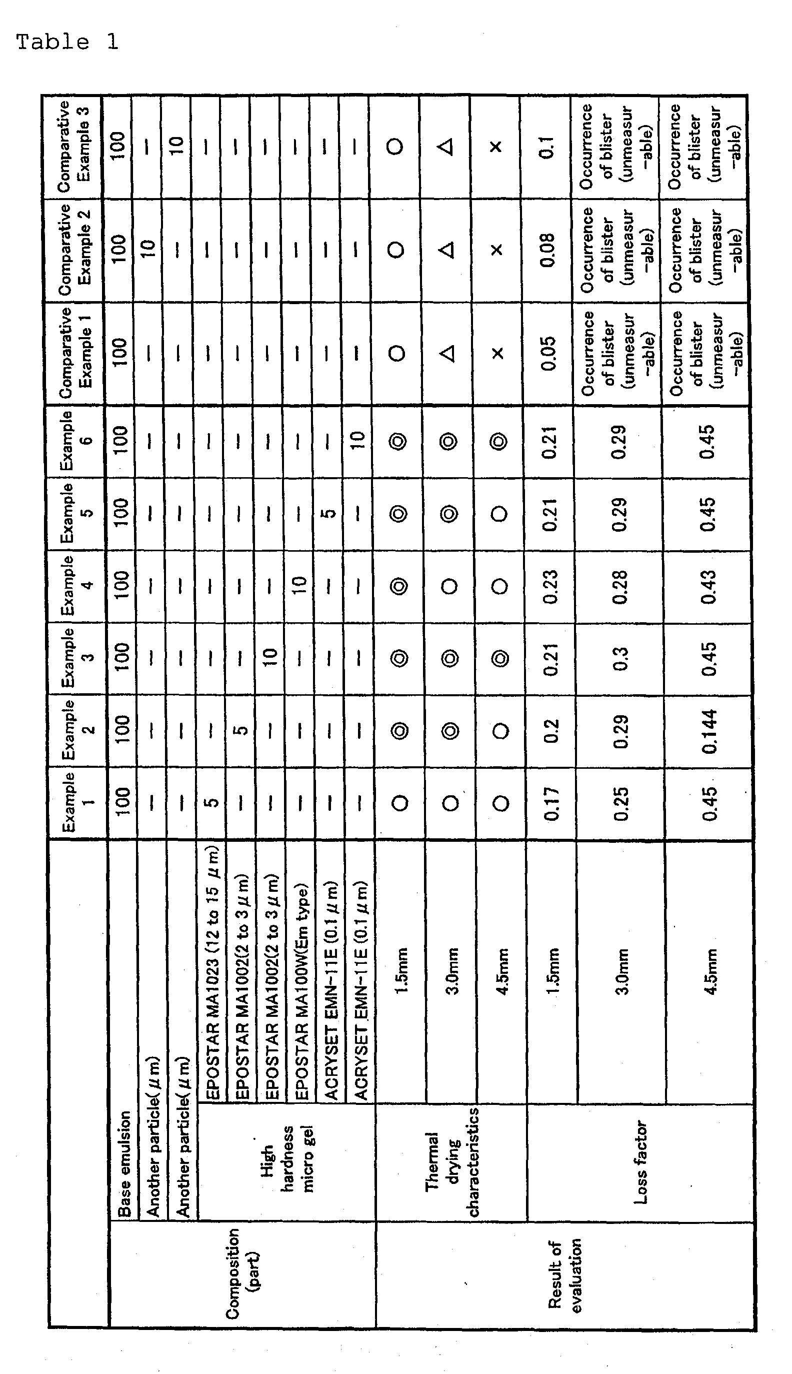

### Example 7

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54.5 parts of methyl methacrylate, 246 parts of styrene, 192 parts of 2-ethylhexyl acrylate, 7.5 parts of acrylic acid, 125 parts of 20% aqueous solution of ADEKARIA SOAP (trademark, product of Asahi Denka Co., Ltd.) previously prepared and 64.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripening at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.1%, 8.8 and 500 mPa·s, respectively. The composition of the above monomer composition was shown together with another compositions in Table 2.

### Example 8

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 53.5 parts of methyl methacrylate, 243.5 parts of styrene, 186.5parts of 2-ethylhexyl acrylate, 7.5 parts of acrylic acid, 10 parts of t-dodecylmercaptan, 125 parts of 20% aqueous solution of ADEKARIA SOAP (trademark, product of Asahi Denka Co., Ltd.) previously prepared and 64.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripening at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.1%, 8.7 and 620 mPa·s, respectively. The composition of the above monomer composition was shown together with another compositions in Table 2.

### Example 9

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54 . 5 parts of methyl methacrylate, 246 parts of styrene, 192 parts of 2-ethylhexyl acrylate, 7.5 parts of acrylic acid, 50 parts of 20% aqueous solution of ADEKARIA SOAP (trademark, product of Asahi Denka Co., Ltd.) previously prepared and 112 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripening at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 54.9%, 8.7 and 520 mPa·s, respectively. The composition of the above monomer composition was shown together with another compositions in Table 2.

### Example 10

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54.5 parts of methyl methacrylate, 246 parts of styrene, 192 parts of 2-ethylhexyl acrylate, 7.5 parts of acrylic acid, 50 parts of 20% aqueous solution of ADEKARIA SOAP (trademark, product of Asahi Denka Co., Ltd.) previously prepared, 20 parts of 25% aqueous solution of AQUARON RN-20 (trademark, product of Daiichi Kogyo Seiyaku Co., Ltd.) and 91.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.0%, 8.8 and 550 mPa·s, respectively. The composition of the above monomer compositionwasshowntogetherwithanothercompositionsinTable 2.

### Example 11

A separable flask equipped with a stirrer, reflux condenser, thermometer, nitrogen gas inlet tube and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54 . 5 parts of methyl methacrylate, 246 parts of styrene, 192 parts of 2-ethylhexyl acrylate, 7.5 parts of acrylic acid, 50 parts of 20% aqueous solution of sodium polyoxyethylene alkyl ether sulfate (trademark: LEVENOL WZ, product of Kao Corporation), 20 parts of 25% aqueous solution of AQUARON RN-20 (trademark, product of Daiichi Kogyo Seiyaku Co., Ltd.) and 91.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.0%, 8.8 and 540 mPa·s, respectively. The composition of the above monomer composition was shown together with another compositions in Table 2.

### Example 12

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54 . 5 parts of methyl methacrylate, 246 parts of styrene, 192 parts of 2-ethylhexyl acrylate, 7.5 parts of acrylic acid, 25 parts of 20% aqueous solution of ADEKARIA SOAP (trademark, product of Asahi Denka Co., Ltd.) previously prepared, 25 parts of 20% aqueous solution of LEVENOL WZ (trademark, product of Kao Corporation) and 112 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.0%, 8.9 and 540 mPa·s, respectively. The composition of the above monomer composition was shown together with another compositions in Table 2.

### Comparative Example 4

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54.5 parts of methyl methacrylate, 246 parts of styrene, 192 parts of 2-ethylhexyl acrylate, 7.5 parts of acrylic acid, 125 parts of 20% aqueous solution of LEVENOL WZ (trademark, product of Kao Corporation) previously prepared, and 64.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.1%, 8.8 and 500 mPa·s, respectively. The composition of the above monomer composition was shown together with another compositions in Table 2.

### Comparative Example 5

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 53.5 parts of methyl methacrylate, 243.5 parts of styrene, 186.5 parts of 2-ethylhexyl acrylate, 7.5 parts of acrylic acid, 10 parts of t-dodecylmercaptan, 125 parts of 20% aqueous solution of LEVENOL WZ (trademark, product of Kao Corporation) previously prepared, and 64.6 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.3%, 8.4 and 450 mPa·s, respectively. The composition of the above monomer composition was shown together with another compositions in Table 2.

### Comparative Example 6

A separable flask equipped with a stirrer, reflux condenser, thermometer, nitrogen gas inlet pipe and dropping funnel was charged with 170.5 parts of deionized water. Then, under stirring in a nitrogen gas stream, the contents of the flask were heated to an internal temperature of 70°C. On the other hand, the above dropping funnel was charged with a monomer emulsion composed of 54.5 parts of methyl methacrylate, 24 6 parts of styrene, 192 parts of 2-ethylhexyl acrylate, 7.5 parts of acrylic acid, 25 parts of 20% aqueous solution of ADEKARIA SOAP (trademark, product of Asahi Denka Co., Ltd.) previously prepared, and 128.4 parts of deionized water. Then, with the separable flask being held at an internal temperature of 70°C, the above monomer emulsion was added uniformly dropwise over 3 hours. At the same time, 53.9 parts of 5% aqueous solution of potassium persulfate and 40 parts of 2% aqueous solution of sodium hydrogensulfite were added uniformly dropwise over 3 hours. But, the emulsion was gelated halfway through dropwise addition and therefore the remainder of the evaluation was not performed.

### Comparative Example 7

A separable flask equipped with a stirrer, reflux condenser, thermometer, nitrogen gas inlet pipe and dropping funnel was charged with 156 parts of deionized water. Then, under stirring in a nitrogen gas stream, the contents of the flask were heated to an internal temperature of 70°C. On the other hand, the above dropping funnel was charged with a monomer emulsion composed of 54.5 parts of methyl methacrylate, 24 6 parts of styrene, 192 parts of 2-ethylhexyl acrylate, 7.5 parts of acrylic acid and 250 parts of 20% aqueous solution of ADEKARIA SOAP (trademark, product of Asahi Denka Co., Ltd.) previously prepared. Then, with the separable flask being held at an internal temperature of 70°C, the above monomer emulsion was added uniformly dropwise over 3 hours. At the same time, 53.9 parts of 5% aqueous solution of potassiumpersulfate and 40 parts of 2% aqueous solution of sodium hydrogensulfite were added uniformly dropwise over 3 hours. After completion of dropwise addition, the mixture was incubated for ripeninig at 76°C for 3 hours. After cooling, 5.1 parts of 25% aqueous ammonium was added. The emulsion was cooled and taken out through a 100-mesh stainless steel filter screen, whereby an aqueous resin was obtained. The nonvolatile matter content, a pH and viscosity of the resulting aqueous resin were 55.1%, 8.8 and 350 mPa · s, respectively. The composition of the above monomer composition was shown together with another compositions in Table 2.

With respect to each of the emulsions obtained in the above-mentioned Examples 7 to 12 and Comparative Examples 4 to 7, the following evaluation tests were conducted. These results were as shown in Tables 2 and 3.

### (1) Mechanical stability test(Maron Test)

50 g of the emulsion filtered with a 300-mesh stainless steel filter screen was subj ected to a mechanical stability test (according to JIS K 6828, 1996, the scale of a platform weighing machine is graduated in 10 kg, disc rotational speed 1, 000 rpm, rotation time 5 minutes, test temperature 25°C) using a Maron Test stability tester (product of KUMAGAI RIKI KOGYO CO.).

After testing, the emulsion was filtered with a 100-mesh stainless steel filter screen and dried at 110°C for 1 hour in a drying oven.

An evaluation after the test was conducted according to the following equation.

Flocculation rate (%) = (weight of the steel filter screen after drying (g) - weight of the steel screen before drying (g)) / 50 g × 100
ⓞ : not more than 0.1%
○ : not less than 0.1% and not more than 0.5%
Δ : not less than 0.5% and not more than 1.0%
× : not less than 1.0%

### (2) Thermal drying characteristics

The acrylic resin emulsions obtained in the Examples 7 to 12 and Comparative Examples 4 to 7 were blended as follows to form water-based paint compositions having a vibration damping property and thermal drying characteristics were verified.
Acrylic copolymer emulsion 100 parts
Calcium carbonate: NN#200 (*1) 250 parts
Dispersant: Demol EP (*2) 1 part
Thickener: Acryset WR-600 (*3) 2 parts
Antifoaming agent: Nopco 8034L (*4) 0.3 part

(*1): product of Nitto Powder Industry Co.
(*2): product of Kao Corporation
(*3): product of Nippon Shokubai Co.
(*4): product of Sun Nopco Co.

Each of the dampening coating formulation was poured into a formhaving a thickness of 1.5mm, 3.5 mm or 4.5 mm on a cold-rolled steel panel (SPCC, 15mm wide × 250mm long × 0.8mm thick) and dried at 150°C for 25 minutes to form a film. After drying, the state of a film was observed and a drying characteristics was evaluated according to the following criteria.

### Evaluation criteria

○ : no blister
× : occurrence of blister on the surface of a film

### (3) Time-course stability of emulsion

The viscosity of emulsions was measured with a BM type viscometer (rotor 2, 30 rpm). The initial viscosity and the viscosity after a storage of 1 month at 40°C were measured and the rate of change of viscosity^{*)} was determined. When the rate of change of viscosity was 10% or less, it was assumed to be in a level of acceptance.

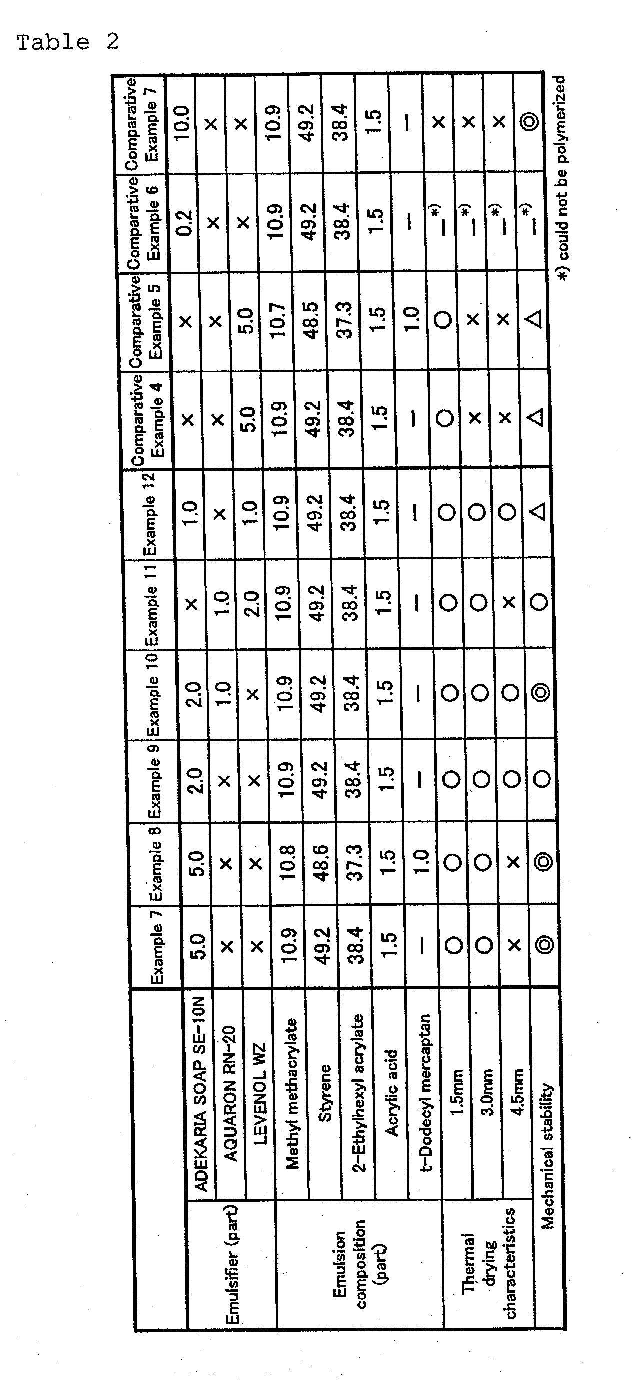

**Table 3**

| Sample | Solid matter content (%) | pH | Initial viscosity (mPa·s) | Viscosity after storage at 40°C (Mpa.s) | a Rate of change of viscosity (%) |
|---|---|---|---|---|---|
| Example 7 | 55.1 | 8.8 | 500 | 470 | 6 |
| Example 8 | 55.1 | 8.7 | 620 | 590 | 5 |
| Example 9 9 | 54.9 | 8.7 | 520 | 500 | 4 |
| Example 10 | 55.0 | 8.8 | 550 | 530 | 4 |
| Example 11 | 55.0 | 8.9 | 540 | 500 | 7 |
| Example 12 | 55.0 | 8.9 | 540 | 520 | 4 |
| Comparative Example 4 | 55.1 | 8.9 | 500 | 410 | 18 |
| Comparative Example 5 | 55.3 | 8.4 | 450 | 380 | 16 |
| Comparative Example 6 | - | - | - | - | - |
| Comparative Example 7 | 55.1 | 8.8 | 350 | 310 | 11 |

*) the rate of change of viscosity (%) = (initial viscosity - viscosity after a storage at 40°C)/ (initial viscosity) × 100

The present application claims priority under 35 U.S.C. § 119 to Japanese Patent Application No. 2003-069641, filedMarch 14, 2003, entitled "PAINT COMPOSITION FOR THERMAL DRYING." The contents of that application are incorporated herein by reference in their entirety.

## Claims

1. A paint composition for thermal drying,
which comprises an emulsion having a glass transition temperature of 50°C or lower and organic fine particles having a mean particle diameter of 15 µm or smaller.

2. The paint composition for thermal drying according to claim 1,
wherein said organic fine particles have a melting point by differential scanning calorimetry of 65°C or higher.

3. The paint composition for thermal drying according to claim 1 or 2,
wherein said emulsion is formed by emulsion polymerizing a monomer component with a reactive emulsifier.

4. The paint composition for thermal drying according to claim 1, 2 or 3,
wherein said emulsion has a glass transition temperature of -50 to 40°C.
